Europäisches Patentamt

European Patent Office

Office européen des brevets

(19)

(11) Veröffentlichungsnummer: **0 011 836**
**B1**

(12) **EUROPÄISCHE PATENTSCHRIFT**

(45) Veröffentlichungstag der Patentschrift: **24.08.83**

(51) Int. Cl.³: **C 09 K 5/04, F 25 B 15/00**

(21) Anmeldenummer: **79104676.6**

(22) Anmeldetag: **26.11.79**

(54) Arbeitsstoffpaar zum Betrieb von Absorptionswärmepumpen.

(30) Priorität: **04.12.78 DE 2852312**

(43) Veröffentlichungstag der Anmeldung:
**11.06.80 Patentblatt 80/12**

(45) Bekanntmachung des Hinweises auf die Patenterteilung:
**24.08.83 Patentblatt 83/34**

(84) Benannte Vertragsstaaten:
**AT BE CH DE FR GB IT NL SE**

(56) Entgegenhaltungen:
**DE - A - 1 519 723**
**US - A - 1 734 278**
**US - A - 3 458 445**
**US - A - 3 609 087**

**CHEMICAL ABSTRACTS, Band 79, Nr. 22, 3.**
**Dezember 1973, Zusammenfassung BNr.**
**127759r, Columbus, Ohio, US**

(73) Patentinhaber: **Alefeld, Georg, Prof. Dr.**
**Josef-Raps-Strasse 3**
**D-8000 München 40 (DE)**
(73) Patentinhaber: **Radermacher, Reinhard**
**Hess-Strasse 36**
**D-8000 München 40 (DE)**

(72) Erfinder: **Alefeld, Georg, Prof. Dr.**
**Josef-Raps-Strasse 3**
**D-8000 München 40 (DE)**
Erfinder: **Radermacher, Reinhard**
**Hess-Strasse 36**
**D-8000 München 40 (DE)**

(74) Vertreter: **Kraus, Walter, Dr. et al,**
**Patentanwälte Dres. Kraus & Weisert**
**Irmgardstrasse 15**
**D-8000 München 71 (DE)**

Courier Press, Leamington Spa, England.

Arbeitsstoffpaar zum Betrieb von Absorptionswärmepumpen

Die Erfindung betrifft ein Arbeitsstoffpaar zum Betrieb von Absorptionswärmepumpen aus einem Arbeitsmittel und einem Absorber.

Für den Betrieb von Absorptionswärmepumpen (Absorptionskältemaschinen) muß zusätzlich zum Arbeitsmittel mit den gewünschten Eigenschaften auch ein geeigneter Absorberstoff gefunden werden.

Bisher haben sich die Arbeitsmittel $NH_3$ mit $H_2O$ als Absorber bzw. $H_2O$ mit einer wäßrigen LiBr-Lösung als Absorber in Kältemaschinen als technisch brauchbar erwiesen.

Zum Zweck der Reduzierung der Drücke in der Wärmepumpe und aus Sicherheitsgründen wäre es wünschenswert, Ammoniak durch ein anderes Arbeitsfluid, wie z.B. Methylamin, zu ersetzen. Salze, die bei dem Absorptionsvorgang fest bleiben, wie z.B. $CaCl_2$, $SrCl_2$, LiCl, $MgCl_2$ (L. Vahl, Z. f. d. ges. Kälte-Industrie, 38, 177 (1931)), haben verfahrenstechnische Nachteile, Flüssige Methylamin-Salzlösungen, wie z.B. $CH_3NH_2$/NaSCN (US—PS 3 458 448), haben eine zu geringe Ausgasungsbreite. Da man in der Nähe der Löslichkeitsgrenze arbeiten müßte, besteht überdies die Gefahr, daß sich feste Ausscheidungen bilden.

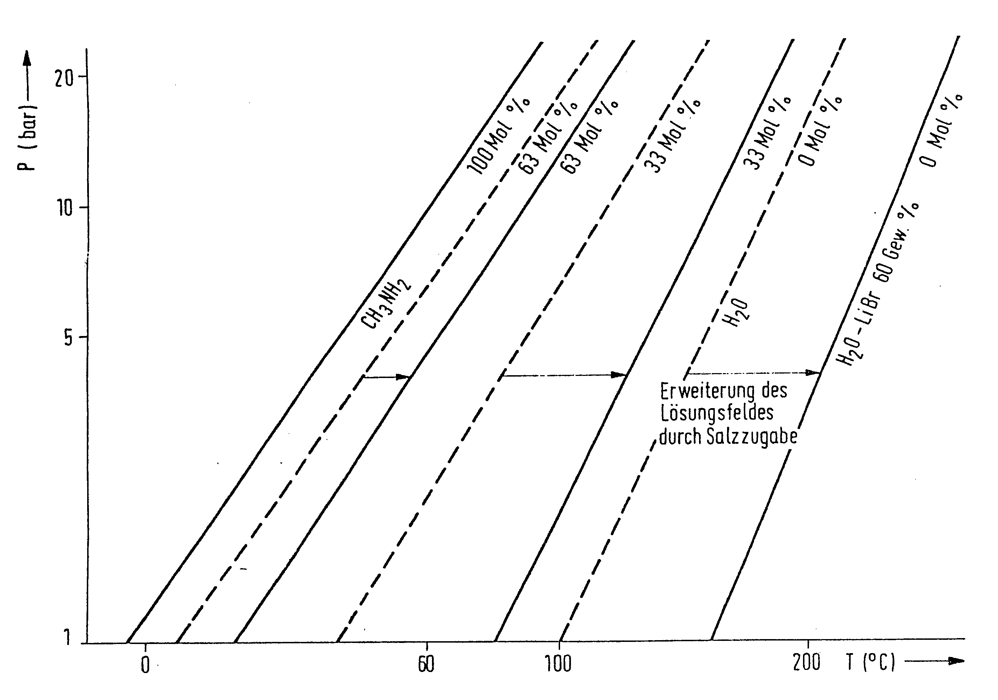

Die Anwendung von Wasser als Absorber (W. Niebergall, Hdb. d. Kältetechnik Bd. 7 (1959)) scheitert daran, daß die Dampfdruckkurven von Methylamin und Wasser zu nahe beieinander liegen (strichlierte Linien in der Abbildung), so daß sich wiederum ein zu enges Lösungsfeld ergibt.

Die US—A—1 734 278 beschreibt ein Arbeitsstoffsystem für Absorptionskältemaschinen, welches Amine und eine Mischung von Wasser mit Salzen enthält, vgl. insbesondere Seite 1, Zeilen 32 bis 35, 42 bis 49, 95 bis 97 und Seite 2, Zeilen 1 und 2 sowie 20 bis 33.

Die im CHEMICAL ABSTRACT, Band 79, Nr. 22, 3. Dezember 1973, veröffentlichte Zusammenfassung Nr. 127759r beschreibt ein Arbeitsstoffsystem für Absorptionskältemaschinen, welches Alkohole, Salze und Wasser enthält.

Demgegenüber ist es Aufgabe der Erfindung, ein spezielles System zum Betrieb von Absorptionswärmepumpen zur Verfügung zu stellen, bei dem keine Ausscheidung der Salzkomponente erfolgt, und mit dem ein optimaler Temperaturbereich er schlossen werden kann.

Diese Aufgabe wird erfindungsgemäß bei einem Arbeitsstoffpaar der oben erwähnten Art dadurch gelöst, daß das Arbeitsmittel Methylamin und der Absorber eine wäßrige Lithiumbromidlösung ist.

Das erfindungsgemäße Arbeitsstoffpaar unterscheidet sich von dem in der US—A—1 734 278 beschriebenen Arbeitsstoffsystem für Absorptionskältemaschinen hauptsächlich dadurch, daß bei dem erfindungsgemäßen System der Absorber eine wäßrige Lithiumbromidlösung ist. Demgegenüber ist bei dem aus der US—A—1 734 278 bekannten Arbeitsstoffsystem das Lösungsmittel ein Alkohol. Auch finden sich in dieser Druckschrift keinerlei Hinweise, in einem solchen Arbeitsstoffsystem das spezielle Salz Lithiumbromid zu verwenden.

Mit dem erfindungsgemäßen Arbeitsstoffpaar können folgende, nicht-vorhersehbare Vorteile beim Betrieb einer Absorptionswärmepumpe realisiert werden:

a) Bei der erfindungsgemäß erfolgenden Verwendung einer Lithiumbromidlösung erfolgt keine Ausscheidung des Salzes, von festen Hydraten oder von festen Amin-Komplexverbundungen im Arbeitsbereich, wie es bei anderen Salzen der Fall ist.

b) Erst durch die erfindungsgemäß vorgesehene Kombination $H_2O$/LiBr/$CH_3NH_2$ gelingt es, einen optimalen Temperaturbereich zu erschließen und in diesem Temperaturbereich eine optimale Dampfzusetzung mit niedrigem Wassergehalt zu realisieren.

Aufgrund umfangriecher Messungen an verschiedenen Systemen, die in der Abbildung und der Tabelle I exemplarisch dargestellt sind, ergibt sich, daß z.B. durch die Kombination von 3 Gew.Teilen LiBr mit 2 Gew.Teilen Wasser das Lösungsfeld für $CH_3NH_2$ so weit auseinandergezogen wird, daß diese Kombination LiBr/$H_2O$ als Absorber für $CH_3NH_2$ gut geeignet ist (Abbildung). Diese Kombination bewirkt, daß mit Methylamin als Arbeitsfluid eine Absorptionswärmepumpe mit vergleichbarer Leistungsziffer wie bisher für Arbeitsfluide $NH_3$/$H_2O$, jedoch mit einem um einen Faktor 3 niedrigeren Druck, bei gleichen Betriebstemperaturen betrieben werden kann. Außerdem ist die Gefahr der Ausscheidung selbst bei extremer Ausgasung von Methylamin nicht mehr gegeben. Für den Fachmann ist aus Tabelle I, Zeile 2 ersichtlich, daß die Kombination $CH_3NH_2$ mit $H_2O$/LiBr als Absorberstoff sogar eine bessere Leistungsziffer erwarten läßt als für die Kombination $NH_3$ mit $H_2O$ als Absorber. Außerdem ist die Giftigkeit von Methylamin erheblich geringer als von $NH_3$.

Ein weiterer Vorteil ergibt sich daraus, daß in der Absorptionsmaschine der Rektifikator in Wegfall kommen kann.

Gegenüber früheren Versuchen, Mehrstoffabsorber zu verwenden, unterscheidet sich die vorliegende erfindung folgendermaßen: Die in der US—A—1 848 918 beschriebene Erfindung bezog sich auf Ammoniak als Arbeitsfluid und hatte zum Ziel, die Neigung der Dampfdruckkurven durch Zusätze zum Absorber so zu verändern, daß sich Schnittpunkte verschiedener Dampfdruckkurven ergeben. Die Untersuchungen von Albright et al (ASHRAE Transactions 72, 198 (1966)) sowie von Unger (Beilage z. Kältetechnik *12*, 119 (1957)) über Zweistoffabsorber hatten ebenfalls zum Ziel, die Absorptionseigenschaften für das Arbeitsfluid Ammoniak zu verändern, so daß die obengenannten Vorteile nicht erzielt werden konnten.

Zur Verhinderung der Korrosion können die gleichen Korrosionsinhibitoren Verwendung finden wie für das System LiBr/$H_2O$, also z.B. ein Zusatz von Natriumchromat.

TABELLE I
Kondensatortemperatur 60°C, Druck 10 bar
(Konzentrationsangaben in Mol $CH_3NH_2$/(Mol $CH_3NH_2$+Mol $H_2O$)

|  | Austreiber-temperatur °C | $CH_3NH_2$ in flussiger Phase | $H_2O$ in Gasphase |
|---|---|---|---|
| $CH_3NH_2$—$H_2O$ | 140 | 19% | 27% |
|  | 160 | 9% | 55% |
|  | 180 | 0% | 100% |
|  | 200 | — | — |
| $CH_3NH_2$—$H_2O$—LiBr (60% Gew.% in wäßriger Lösung) | 140 | 40% | 11% |
|  | 160 | 31% | 18% |
|  | 180 | 18% | 32% |
|  | 200 | 12% | 44% |

**Patentanspruch**

Arbeitsstoffpaar zum Betrieb von Absorptionswärmepumpen aus einem Arbeitsmittel und einem Absorber, dadurch gekennzeichnet, daß das Arbeitsmittel Methylamin und der Absorber eine wäßrige Lithiumbromidlösung ist.

**Revendication**

Couple de produits de travail pour le fonctionnement de pompes à chaleur à absorption comprenant un milieu de travail et un absorbant, caractérisé en ce que le milieu de travail est la méthylamine et l'absorbant une solution aqueuse de bromure de lithium.

**Claim**

A pair of working substances for operating absorption heat pumps consisting of a working medium and an absorber, characterised in that the working medium is methylamine and the absorber an aqueous lithium bromide solution.

P ( bar) →

1   5   10   20

0

$CH_3NH_2$

60

100 Mol %

63 Mol %

63 Mol %

33 Mol %

Erweiterung des
Lösungsfeldes
durch Salzzugabe

$H_2O$

33 Mol %

100

0 Mol %

200   T (°C)

$H_2O$ - LiBr  60 Gew. %

0 Mol %

(°C)